# EUROPÄISCHE PATENTANMELDUNG

(11) **EP 1 327 607 A2**
(43) Veröffentlichungstag der Anmeldung: **16.07.2003**
(21) Anmeldenummer: 02025905.7
(22) Anmeldetag: 20.11.2002
(51) Int. Cl.: C01B 3/36

(54) **Verfahren zur herstellung von synthesegas**

(30) Priorität: 10.01.2002 DE 10200639
(71) Anmelder: Oxeno Olefinchemie GmbH, 45772 Marl (DE)
(72) Erfinder: Lüken, Hans-Gerd, Dr., 45772 Marl (DE); Büschken, Wilfried, Dr., 45271 Haltern (DE); Droste, Wilhelm, Dr., 45770 Marl (DE)

(57) **Zusammenfassung**

Die Erfindung betrifft ein Verfahren zur Herstellung durch Verdüsung eines flüssigen Brennstoffs in Gegenwart von Sauerstoff und Wasserdampf, wobei die zur Verdüsung des flüssigen Brennstoffs maximale dynamische Viskosität durch Abmischen mindestens eines Brennstoffs mit einer dynamischen Viskosität, die über der maximalen dynamischen Viskosität liegt, mit mindestens einer Flüssigkeit mit einer dynamischen Viskosität, die unter der maximalen dynamischen Viskosität liegt, eingestellt wird.

Als Einsatzstoffe können z. B. Rußöle und niedrig viskose Destillationsrückstände so abgemischt werden, dass die Viskosität des Gemisches zur Verdüsung ausreicht.

## Beschreibung

Die Erfindung betrifft ein Verfahren zur Herstellung von Synthesegas durch Druckvergasung von hoch- und niedrigviskosen pumpbaren Einsatzstoffen wie z. B. Neben- oder Abfallprodukten und/oder schwerem Heizöl.

Synthesegas (Gemisch aus Kohlenmonoxid und Wasserstoff) ist ein wichtiges Zwischenprodukt bei der Synthese vieler organischer Verbindungen. So wird es beispielsweise zur Herstellung von Aldehyden und/oder Alkoholen durch Hydroformylierung von Olefinen genutzt. Es ist Einsatzstoff bei der Fischer-Tropsch-Synthese von Kohlenwasserstoffen. Bei der Koch-Synthese entstehen durch Umsetzung von Olefinen mit dem CO-Anteil des Synthesegases und Wasser Carbonsäuren. Ebenfalls kann Synthesegas zur Herstellung von Salzen der Ameisensäure eingesetzt werden. Weiterhin wird Synthesegas zur Herstellung von Wasserstoff verwendet.

Es ist bekannt, Synthesegas durch partielle Oxidation von Kohlenstoff-haltigen Einsatzstoffen wie z. B. Rußölen mit Sauerstoff in Gegenwart von Wasserdampf bei hohen Temperaturen unter Druck zu erzeugen. Dabei werden im Falle von Ölvergasungen pumpbare Öle eingesetzt. Ein bevorzugter Einsatzstoff zur Herstellung von Synthesegas ist schweres Heizöl.

Um eine möglichst schnelle Reaktion sowie hohe Ausbeuten an Synthesegas zu erhalten, ist es unter anderem erforderlich, das Einsatzgemisch in möglichst fein verteilter Form in den Reaktor einzubringen. Dies kann durch Eindüsung erreicht werden, wenn die Viskosität des Einsatzstoffes ausreichend niedrig ist. Daher wird die Viskosität des Einsatzgemisches in der Einspritzdüse bei Druckvergasungen häufig auf unter 300 mPa*s (bei 100 °C) eingestellt.

Diese Viskosität des Einsatzstoffs in den Düsen wird in der Regel durch Vorwärmung des Einsatzstoffs erreicht.

In EP 0 255 748 B1 wird ein Verfahren zur Herstellung von Synthesegas beschrieben, bei dem die Viskosität des Einsatzstoffs durch Erwärmen auf Temperaturen von 120 bis 170 °C auf Werte zwischen 200 bis 20 mPa*s gesenkt wird.

In CZ 234 797 wird ein Verfahren offenbart, bei dem die kinematische Viskosität des Einsatzmaterials durch Aufheizen auf Temperaturen von 110 bis 130 °C auf Werte von 20 bis 30 mm²/s gebracht wird. Bei Annahme einer Dichte von 1000 kg/ m³ entsprechen diese Werte dynamischen Viskositäten von 20 bis 30 mPa*s.

Synthesegasreaktoren, die andere Einsatzstoffe wie schweres Heizöl verwenden, sind bekannt und umfassen spezielle Verfahrensschritte, um den Brennstoff pump- und verdüsbar zu machen. So offenbart DE 43 05 825 ein Verfahren, bei dem Schweröle aus der Destillation von Erdöl, Bitumen und Russöle (Gemische aus Ruß und Schweröl) umgesetzt werden. DE 43 29 436 beschreibt einen Prozess zur Herstellung von Synthesegas, bei dem Altkunststoffe aufgeschmolzen, mit teilkompatiblen Erdölzwischenprodukten im Massen-Verhältnis 1 : 10 vermischt und unter Scherung bei einer Temperatur von unter 300 °C vergast werden.

Im sog. Shell-Verfahren zur Synthesegaserzeugung wird Russöl umgesetzt, wobei der bei der Vergasung anfallende Ruß in Benzin aufgenommen und mit Schweröl vermischt, und das leichtsiede Benzin anschließend wieder abdestilliert wird. (Ullmann's Encyclopedia of Industrial Chemistry, 5^{th} Ed., 1989, VCH-Verlag Weihnheim, Bd. A12, S. 201-213)

Diesen Verfahren ist gemein, das hochviskose Einsatzstoffe - gleich welcher Herkunft - nur unter Einsatz thermischer (Vorerwärmung) oder mechanischer Energie (Scherung) in eine verdüsbare Form mit ausreichend niedriger Viskosität gebracht werden können.

Das Vorwärmen oder Scheren der Einsatzstoffe eines Synthesegasverfahrens erfordert Energie und Investment. Es bestand daher die Aufgabe, ein Verfahren zu entwickeln, dass diese Maßnahmen vermeidet und damit kostengünstiger ist.

Es wurde nun gefunden, dass auch hochviskose Einsatzstoffe in üblichen Synthesegasanlagen auch ohne Vorwärmung oder Scherung zur Viskositätsverminderung eingesetzt werden können, wenn die Viskosität des hochviskosen Einsatzstoffs durch Zumischen von niedrigviskosen Flüssigkeiten, z. B. Reststoffen aus organischen Synthesen derart gesenkt werden kann, dass die dynamische Viskosität dieser Stoffgemische unter der maximal zulässigen Viskosität des Synthesegasverfahrens liegt.

Gegenstand der Erfindung ist daher ein Verfahren zur Herstellung von Synthesegas durch Verdüsung eines flüssigen Brennstoffs in Gegenwart von Sauerstoff und Wasserdampf, wobei die zur Verdüsung des flüssigen Brennstoffs maximale dynamische Viskosität durch Abmischen mindestens eines Brennstoffs mit einer dynamischen Viskosität, die über die maximale dynamischen Viskosität liegt, mit mindestens einer Flüssigkeit mit einer dynamischen Viskosität die unter der maximalen dynamischen Viskosität liegt, eingestellt wird.

Die maximale dynamische Viskosität des Brennstoffs ist von der Synthesegasanlage abhängig und kann z. B. von Düsendurchmesser, der Pumpenleitung oder den Verdüsungstemperaturen abhängen. Diese maximale Viskosität ist dem Fachmann bzw. dem Betreiber der Anlage bekannt oder kann leicht, z. B. mit einem Platten-/Kegel-Viskosimeter bestimmt werden.

Wichtig für das erfindungsgemäße Verfahren ist nicht die absolute Höhe der maximalen Viskosität, sondern das diese durch das Abmischen von zu viskosen Brennstoffen (d. h. deren Viskosität liegt über der maximalen Viskosität) mit niedrigviskosen Flüssigkeiten (d. h. deren Viskosität liegt unter der maximalen Viskosität) erreicht bzw. unterschritten wird. Üblicherweise liegen die maximalen Viskositäten bei 300 mPa*s. Bevorzugte Bereiche sind z. B. 1-300, bevorzugt unter 200 mPa*s, wie 1-200 mPa*s.

Besonderes Merkmal der vorliegenden Erfindung ist das gemeinsame Verdüsen von hochviskosen (z. B.Viskosität bei 100 °C über 300 mPa*s) Brennstoffen mit niedrigviskosen Flüssigkeiten (z. B.Viskosität bei 100 °C unter 300 mPa*s). Im Rahmen der vorliegenden Erfindung sind dynamische Viskositäten gemeint, die sich mit den üblichen Standardmethoden, beispielsweise mit Hilfe eines Platten/Kegel-Viskosimeters, bestimmen lassen.
Hochviskose Einsatzstoffe mit einer Viskosität über der maximalen Viskosität sind beispielsweise flüssige oder bitumöse Neben- oder Abfallprodukte aus organischen oder anorganischen Synthesen, z. B. der chemischen oder petrochemischen Industrie, Lackrückstände, Rückstände aus Kokereien, Rußöle, Destillationsrückstände oder schweres Heizöl, nichtspezifikationsgerechte flüssige, bitumöse oder pastöse Produkte oder sonstige im Wesentlichen flüssige Stoffgemische. Rußöle sind Öl-Ruß-Gemische, z. B. aus Acetylen-Anlagen, Crackern, Rußfabrikationsanlagen oder sonstigen Verbrennungsanlagen z. B. mit einem Rußanteil von bis zu 20 Massen-%.

Darüber hinaus können organisch belastete Abwässer mit hohem Anteil an kohlenstoffhaltigen Verbindungen wie wässrige Lösungen, Suspensionen oder Dispersionen organischer Verbindungen oder Ruße als Brennstoff mit einer Viskosität, die über der maximalen Viskosität liegt, eingesetzt werden.

Niedrigviskose Einsatzstoffe mit einer Viskosität unter der maximalen Viskosität sind z. B. leichtes Heizöl, Lösungsmittelreste, flüssige Abfall- oder Nebenprodukte der chemischen oder petrochemischen Industrie, Rückstände aus Kokereien, Leichtsieder-Fraktionen aus Destillationsanlagen, Destillationsrückstände, Destillationsvorläufe oder auch organisch belastetes Abwasser.

Möglich ist auch der Einsatz von Wasser- oder wässrigen Lösungen, Suspensionen oder Dispersionen organischer Verbindungen oder Ruße als Flüssigkeit mit einer Viskosität, die unter der maximalen Viskosität liegt.

Alle genannten Einsatzstoffe können selbst auch Gemische darstellen. Die Kenntnis der elementaren Zusammensetzung ist für die Steuerung des Prozesses eine wichtige Größe. Die resultierenden Brennstoffe bestehen im Idealfall zu über 95 % aus den Elementen Kohlenstoff, Wasserstoff und Sauerstoff. Optional kann das resultierende Einsatzgemisch auch größere Mengen an anderen Elementen, wie beispielsweise Schwefel oder Stickstoff enthalten.

Die Einsatzstoffe werden vor dem Synthesegas-Reaktor bzw. der Düse zu einem Gemisch der genannten, unter der maximalen Viskosität liegenden Viskosität vereinigt. Bei der Vereinigung kann eine homogene Lösung oder ein Mehrphasengemisch entstehen. Ist beispielsweise Rußöl eine Komponente, kann eine Dispersion entstehen. Ist beispielweise eine wässrige Lösung oder eine wässrige Dispersion ein Einsatzstoff, kann sich eine Emulsion bilden. Wenn gleichzeitig sowohl Rußöl als auch wässrige Systeme eingesetzt wird, kann ein Dreiphasensystem resultieren. Für das erfindungsgemäße Verfahren ist die Anzahl der Phasen nicht entscheidend. Vielmehr ist wichtig, dass das Gemisch aus den Einsatzkomponenten vor Eindüsung in den Reaktor nicht in mehrere kontinuierliche Phasen zerfällt und dass die Viskosität des Einsatzstoffgemisches vor der Düse im erforderlichen Bereich liegt.

Im Folgenden steht "niedrig viskos" bzw. "hoch viskos" für Viskositäten, die unter bzw. über der maximalen dynamischen Viskosität liegen.

In einer Verfahrensvariante wird schweres Heizöl und/oder Russöl mit einer niedrigviskosen Flüssigkeit vereinigt. Schweres Heizöl oder Rußöl muss, um es in einen pumpbaren Zustand zu bringen, auf über 100 °C aufgeheizt werden. Diese hoch viskosen Brennstoffe werden mit kalten niedrigviskosen Einsatzstoffen gemischt. Dabei stellt sich ein geeigneter Temperaturbereich des resultierenden Gemischs von 40 bis 120 °C, insbesondere von 60 bis 90 °C ein. Eine zusätzliche Beheizung der Mischvorrichtung oder der Leitung zur Einspritzdüse ist in dieser Variante des erfindungsgemäßen Verfahrens nicht erforderlich.

Die Viskosität des Brennstoff-Gemisches vor der Düse wird hauptsächlich durch das Mengenverhältnis der Einsatzstoffströme eingestellt. Sie kann aus der Temperaturabhängigkeit der Viskositäten der Einsatzströme und deren Mengenanteilen berechnet oder durch orientierende Versuche ermittelt werden. Ebenfalls ist es möglich, die Viskosität des Gemisches vor der Düse durch On-line-Messung zu bestimmen und den gemessenen Wert als Steuerungsgröße für die Zudosierung der Einsatzstoffe im Mischprozess zu verwenden. Im erfindungsgemäßen Verfahren liegt die Viskosität des Einsatzgemisches vor der Düse im Temperaturbereich 40 bis 90 °C unter 300mPa*s, ganz besonders unter 200 mPa*s.

Die partielle Oxidation der Einsatzstoffe mit Sauerstoff in Gegenwart von Wasserdampf zu Synthesegas erfolgt nach an sich bekannten Verfahren in den darin angewandten Druck- und Temperaturbereichen. Das Gleiche gilt für die Reinigung des Rohgases.

### Das erfindungsgemäße Verfahren hat folgende Vorteile:

Ein Aufheizen der Einsatzstoffe auf Temperaturen auf über 100 °C zum Erhalt einer ausreichend niedrigen Viskosität ist nicht notwendig, sodass Energie und Apparate gespart werden. Nebenprodukte aus organischen Synthesen werden stofflich verwertet. Dadurch können die Stoffkosten vermindert werden und eine Entsorgung dieser Nebenprodukte durch eine chemische Verwertung ersetzt werden. Da die Reststoffe aus organischen Synthesen meistens weniger Schwefel, Stickstoff oder Metalle als schweres Heizöl enthalten, entlastet ihr Einsatz die Gasreinigungsstufen einer Synthesegasanlage. Wenn die Gasreinigungsstufen die Kapazität der Synthesegasanlage begrenzt, kann durch Einsatz von Reststoffen aus einer Produktion eine größere Synthesegasmenge erzeugt werden.

Die folgenden Beispiele sollen die Erfindung erläutern, ohne ihren Schutzbereich einzuschränken.

### Bei den Versuchen wurden folgende Einsatzstoffe verwendet:

Schweres Heizöl mit einer mit einer mittleren Viskosität von 140 mPa*s bei 100 °C; Russöl mit einer mittleren Viskosität von 450 mPa*s bei 140 °C und einer von 500 mPa*s bei 100 °C;
Rückstände aus organischen Synthesen mit einer Viskosität von 5 mPa*s bei 20 °C (im Folgenden als Komponente C bezeichnet).

Schweres Heizöl mit einer Temperatur von ca. 100 °C, Rußöl mit einer Temperatur von ca. 140 °C und Komponente C mit einer Temperatur von ca. 20 °C wurden in bestimmten Massenverhältnissen zueinander gemischt. Dabei stellten sich bestimmte Mischtemperaturen und Mischviskositäten ein. Die Versuchsdaten der Versuche wurden in der folgenden Tabelle zusammengefasst.

| Beispiel | Mischungsverhältnis (Gew.-%) | | | Brenner-Eingang | Viskosität der |
|---|---|---|---|---|---|
| | Schweres Heizöl | Rußöl | Komponente C | Temperatur der Mischung in °C | Mischung in mPa*s (100 °C) |
| 1 | 1 | 0,38 | 0,9 | 74 | 145 |
| 2 | 1 | 5,6 | 8,6 | 75 | 195 |
| 3 | 1 | 0,8 | 1,3 | 69 | 183 |
| 4 | 1 | 0,47 | 0,68 | 70 | 179 |
| 5 | 1 | 0 | 0,65 | 69 | 87 |
| 6 | 1 | 0 | 0,71 | 70 | 84 |

Die entsprechend den Beispielen 1 bis 6 hergestellten Gemische wurden anstelle von ca. 100 °C heißem schwerem Heizöl in den Reaktor einer Synthesegasanlage eingedüst. Es konnten im Vergleich zum Einsatz von schwerem Heizöl mit einer Brennereingangstemperatur von ca. 100 °C keine signifikanten Änderungen im Verfahrensablauf festgestellt werden.

## Patentansprüche

1. Verfahren zur Herstellung von Synthesegas durch Verdüsung eines flüssigen Brennstoffs in Gegenwart von Sauerstoff und Wasserdampf,
**dadurch gekennzeichnet,**
**dass** die zur Verdüsung des flüssigen Brennstoffs maximale dynamische Viskosität durch Abmischen mindestens eines Brennstoffs mit einer dynamischen Viskosität, die über der maximalen dynamischen Viskosität liegt, mit mindestens einer Flüssigkeit mit einer dynamischen Viskosität, die unter der maximalen dynamischen Viskosität liegt, eingestellt wird.

2. Verfahren nach Anspruch 1,
**dadurch gekennzeichnet,**
**dass** die maximale dynamische Viskosität des flüssigen Brennstoffs zwischen 1 und 300 mPa*s bei 100 °C liegt.

3. Verfahren nach Anspruch 1,
**dadurch gekennzeichnet,**
**dass** die maximale dynamische Viskosität des flüssigen Brennstoffs zwischen 1 und 200 mPa*s bei 100 °C liegt.

4. Verfahren nach einem der Ansprüche 1 bis 3,
**dadurch gekennzeichnet**,
das als Flüssigkeit mit einer dynamischen Viskosität, die unter der maximalen dynamischen Viskosität liegt, leichtes Heinzöl eingesetzt werden.

5. Verfahren nach einem der Ansprüchl bis 3,
**dadurch gekennzeichnet,**
**dass** als Flüssigkeit mit einer dynamischen Viskosität, die unter der maximalen dynamischen Viskosität liegt, flüssige Neben- oder Abfallprodukte, Destillationsrückstände oder Destillationsvorläufe eingesetzt werden.

6. Verfahren nach einem der Ansprüche 1 bis 3,
**dadurch gekennzeichnet,**
**dass** als Flüssigkeit mit einer dynamischen Viskosität, die unter der maximalen dynamischen Viskosität liegt, wässrige Lösungen, Suspensionen oder Dispersionen organischer Verbindungen oder Ruße eingesetzt werden.

7. Verfahren nach einem der Ansprüche 1 bis 6,
**dadurch gekennzeichnet,**
**dass** als Brennstoff mit einer dynamischen Viskosität, die über der maximalen Viskosität liegt, flüssige oder bitumöse Neben- oder Abfallprodukte, Rußöle, Destillationsrückstände oder schweres Heizöl eingesetzt wird.
